# EUROPEAN PATENT SPECIFICATION

(11) **EP 2 905 407 B1**
(45) Date of publication and mention of the grant of the patent: **16.11.2016**
(21) Application number: 15151755.4
(22) Date of filing: 20.01.2015
(51) Int. Cl.: E05F 3/12, F16K 35/00, F16K 1/50

(54) **Hydraulic door closer with a valve device**
Hydraulischer Türschließer mit einer Ventilvorrichtung
Ferme-porte hydraulique avec un dispositif de valve

(30) Priority: 05.02.2014 DE 102014101416
(43) Date of publication of application: 12.08.2015
(73) Proprietor: DORMA Deutschland GmbH, 58256 Ennepetal (DE)
(72) Inventor: Shyam, Suresh Krishnan, 619285 Jurong (SG)
(74) Representative: Balder IP Law, S.L.

(56) References cited:
- EP-A1- 1 491 801
- GB-A- 647 808
- US-A- 2 586 135

## Description

The present invention is related to a hydraulic door closer with a valve device and with a valve cap for use in the valve device. Such a hydraulic door closer is known from US-A-2586135 disclosing the features of the preamble of claim 1.

It is known, that in hydraulic door users valve devices are used to regulate the flow of hydraulic fluid within the door closer. Therefore, the movement of the door in the opening position as well as in the closing position can be damped by defined flow of fluid through the valve device. To allow a variation of the damping effect for the closing and the opening movement of the door, the valve device commonly known comprises valve entrances and valve exits to let a fluid flow through a valve channel extending between the valve entrance and the valve exit. A valve body of commonly known valve devices can be moved between different valve positions offering different passage areas for passing fluid around the valve body. To move the valve body between different valve positions, it usually comprises an adjustment thread. By rotating the valve body relative to the thread axis of the adjustment thread, the valve body can be moved up or down between the different valve positions.

Commonly known valve devices have a great disadvantage as to their use over long time periods. In particular, in cases with large pressure during the use of the hydraulic door closer, it can happen that a variation of the valve position takes a place in an undesired manner. For example, during a door closing or door opening movement, the respective hydraulic fluid flows through the valve channel. By carrying out this fluid flow, pressure is built up against the valve position of the valve body. This could lead to an unwillingly rotation of the valve body in the outside direction, therefore leading to a variation of the passage area of the valve position. In this case, the variation of the valve position correlates with a variation of the damping effect. Commonly known valve devices deal with that problem by providing for example rotation stoppers to the valve body. A respective solution is for example shown in DE 20 2007 004 104 U1. Such solutions have the great disadvantage of higher manufacturing complexity and costs. EP-A-1491801 discloses a valve with adjustable valve body and a separate stopper ring.

Therefore, it is an object of the present invention to solve aforesaid problems at least partly. In particular, it is an object of the present invention to provide in a cost efficient and easy manner a valve device which is secured against unwillingly moving or changing of the valve positions.

Aforesaid problem is solved by a hydraulic door closer according to independent claim 1. Features and details of the present invention result from the subclaims, the description and the respective drawings.

According to the present invention, the valve device of the door closer comprises a valve entrance and a valve exit. A valve channel offers fluid communication between the valve entrance and the valve exit. Further, the valve device comprises a valve body, with an adjustment thread which is ranged within the valve channel and movable by the adjustment thread between a first valve position with a first passage area and at least a second valve position with a second passage area. An inventive valve device is characterized in that a valve cap is arranged with a contact surface contacting a counter surface of the valve body. Moreover, the valve cap comprises a securing thread with a contrary thread direction compared to the adjustment thread for counter bearing of the valve body.

The valve device comprises a commonly known valve body. This is used by an adjustment thread to be moved between different valve positions. Each valve position comprises an own passage area, thereby defining different square surfaces for passing the fluid flow of the hydraulic fluid. This leads to different valve positions correlating with different damping effects of the hydraulic door closer. To achieve a variation of the damping effect the valve body is rotated relative to a thread axis of the adjustment thread and thereby moved between different valve positions. According to the present invention, the variation of the valve position can now be secured by the valve cap. Therefore, the valve cap is a separate element relative to the valve body. After moving the valve body by the use of the adjustment thread in the respective valve position, the valve cap is used for the securing step. To achieve this, the valve cap is also rotated relative to its thread axis of the securing thread. The rotation of the valve cap takes place in the contrary rotation direction relatively to the rotation of the valve body. Therefore, the valve cap offers a securing counter element for the valve body. The rotation of the valve cap takes place until a contact of a counter contact surface of the valve body.

Different contact surfaces of the valve body as well as of the valve cap can comprise different geometrical extensions. In particular, the respective contact surfaces have a flat extension.

By the use of an inventive valve device, the respective valve position of the valve body is secured by the valve cap. If in this case now the pressure increases within the valve channel by passing fluid, this increasing force can be secured not only by the adjustment thread with a valve body but also via the contact surfaces over the valve cap and the securing thread. A movement in the outside direction for a variation of the valve position by the increasing fluid flow is no longer possible. This is based on the fact that the securing thread and the adjustment thread comprise different thread directions. If such a fluid flow would tent to rotate the valve body around the thread axis of the adjustment thread this leads to a inline rotation in the same direction of rotation of the valve cap by the meaning of friction between the contact surfaces of the valve cap and the valve body. Due to the fact that the valve cap comprises the securing surface with a contrary thread direction, this leads to a counter force against the force of the increased pressure inside the valve channel.

Based on the aforesaid information, the valve cap comprises an easy to manufacture element, because it is separate from the valve body. Moreover, the method for securing the valve body in the respective valve position is to be carried out easily and in particular without detailed and defined instructions. All a person has to do is to place the respective valve cap and rotate it in a commonly known manner.

It is to be noted that in the valve device, which can for example be part of the housing of a hydraulic door closer or comprises an own housing, respective counter threads for the adjustment thread, namely a counter adjustment thread, and for the securing thread, namely a counter securing thread are offered. For example these threads comprise different diameters. In particular, the adjustment thread and the counter adjustment thread comprise a smaller diameter than the securing thread and the counter securing thread. Thereby, the valve body can be moved through the counter securing thread of a respective housing of the valve device to be put in position for carrying out the adjustment movement by the adjustment thread.

It is possible according to the present invention that the adjustment thread and the securing thread comprise the same or at least the same thread pitches with contrary thread directions, in particular standard thread pitches. In general, according to the present invention it is a core idea to present different threads with different directions of the thread. In particular, the thread pitches are identical in particular standard identical thread pitches for example metrical thread pitches. This leads to a further simplification of the valve device and to reduced costs of manufacturing.

It could further be of advantage that the adjustment thread and the securing thread comprise parallel or at least parallel oriented thread axis, in particular a common thread axis. Such an orientation leads to the advantage that a person using an inventive valve device a tool oriented in the same common or parallel orientation. This leads on one hand to easier rotation and thereby to easier handling of an inventive valve device. Moreover, the manufacturing of the inventive valve device, in particular the different threads and the different counter threads is easier and more cost efficient.

It could also be of advantage, that the valve cap comprises a centration surface with different extension compared to the contact surface, contacting a counter centration surface of the valve body. This leads to a situation where side translation movement of the valve cap and the valve body relative to each other is avoided. In particular, it leads to a higher surface contact and thereby to a higher friction force between the contacting valve cap and the valve body. The securing effect described in the introductory part of this application is thereby increased. Moreover, the centration surface can comprise a conical area, which is used for centering the valve cap by the movement into its securing position.

Furthermore, the valve cap can comprise an adjustment opening, opening a passage way to an adjustment interface of the valve body. An adjustment interface can for example be a respective surface area which can be correlated with a tool head, for example a screw driver. The adjustment interface therefore comprises a defined geometrical extension, correlating with the respective tool head. The adjustment opening is in particular configured with a greater diameter than the respective necessary tool head for the adjustment interface. Thereby, the tool head can be moved through the passage way formed by the adjustment opening to be correlated with the adjustment interface to carry out the adjustment movement of the valve body.

Furthermore, it is of advantage that the valve cap comprises a handling interface for turning the valve cap relative to a thread axis of the securing thread. A handling interface can also be configured with a geometrical defined extension, for example correlating with a screw driver interface. Thereby, the handling interface is used to carry out the rotation and thereby the securing movement of the valve cap in an easy and fast manner.

The valve cap comprises a contact surface for contacting the counter contact surface of the valve body of the valve device. The valve cap further comprises a securing thread with a contrary thread direction compared to the adjustment thread of the valve body for counter bearing the valve body. The valve cap thereby leads to the same advantages which have been described in detail with respect to the valve device.

A further aspect of the present invention is a hydraulic door closer comprising a fluid system for damping the closing movement and/or the opening movement of a door. An inventive hydraulic door closer is characterized in that the fluid system comprises at least one valve device according to the present invention. Thereby, the inventive hydraulic door closer leads to the same advantages which have been discussed in detail with respect to the inventive valve device.

The fluid system of the inventive hydraulic door closer can comprise two valve devices, one valve device for the opening movement of the door and one valve device for the closing movement of the door. Thereby two different valve channels are offered by the fluid system, one for a first flow direction for the opening movement of the door and one with a second flow direction with a correlation to the closing movement of the door.

A method of securing a valve position of the valve body of the valve device of the inventive door closer can, comprise the following steps:
- Turning the valve body around a thread axis of an adjustment thread into a first valve position,
- Turning a valve cap around the thread axis of a securing thread until a contact surface of the valve cap contacts a counter contact surface of the valve body.

The present invention is further described in detail with respect to the accompanying drawings. Features discussed within the description of the drawings can be combined with each other freely. The figures schematically:
- Fig. 1: a first embodiment of an inventive valve device,
- Fig. 2: the embodiment of Fig. 1 in a first secured valve position,
- Fig. 3: the embodiment of Fig. 1 in a second secured valve position,
- Fig. 4: an embodiment of an inventive hydraulic door closer,
- Fig. 5: the embodiment of Fig. 4 in a further view,
- Fig. 6: an embodiment of an inventive valve cap and
- Fig. 7: the embodiment of Fig. 6 in another view.

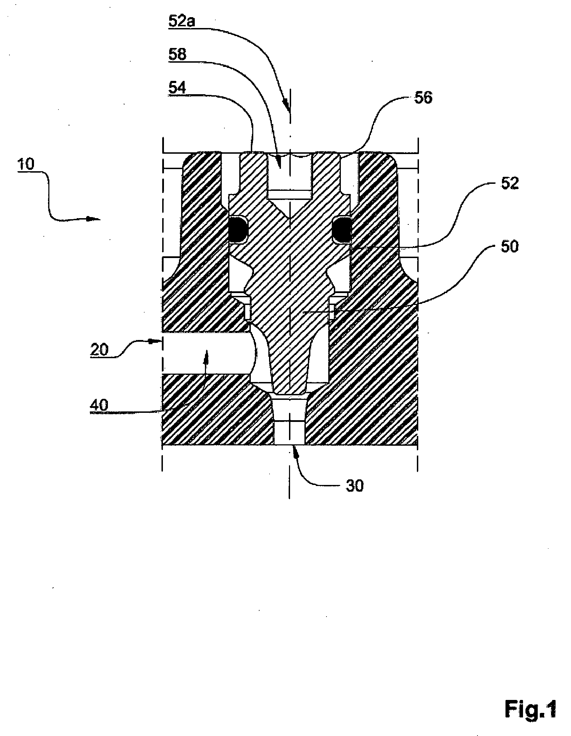

Fig. 1 to 3 show a first embodiment of the valve device 10. The valve device comprises within a housing a valve entrance 20 as well as a valve exit 30. The two openings of the valve entrance 20 and the valve exit 30 are in fluid communication with each other via a valve channel 40. Hydraulic fluid can flow into the valve entrance 20 passing a valve body 50 which is offering a passage area around the valve body 50 and flow through the valve channel 40 out of the valve exit 30.

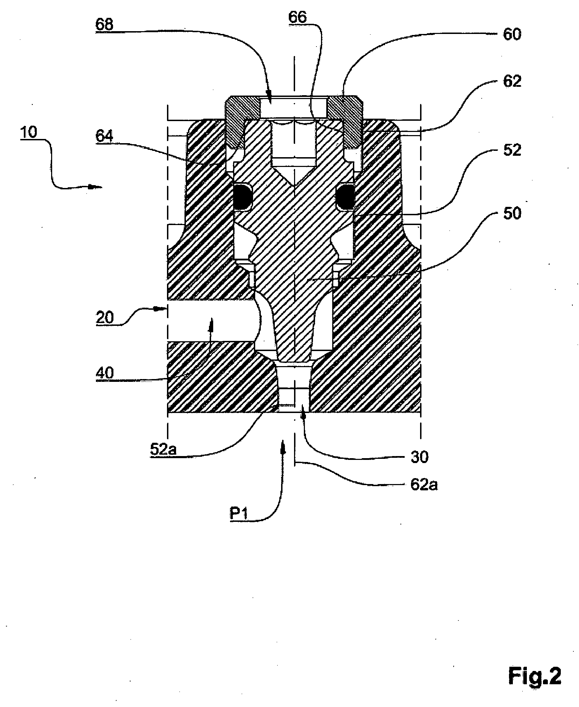

According to Fig. 1, the valve body 50 can be moved upwards and downwards along a movement axis which is correlated with a thread axis 52a of an adjustment thread 52. The movement of adjusting valve positions of the valve body 50 is carried out by rotation of the valve body 50. A tool head can be used to correlate with an adjustment interface 58 to carry out the rotation of the valve body 50 relative to the thread axis 52a. After the valve body 50 has been positioned in the respective valve position, for example in a first valve position P1 according to Fig. 2, this position will be secured. To secure that position a valve cap 60 is used and also rotated around a thread axis 62a of a securing thread 62. The thread axis 62a of the securing thread 62 is common and parallel with the thread axis 52a of the adjustment thread 52. The rotation of the valve cap 60 is carried out until a contact surface 64 of the valve cap contacts the counter contact surface 54 of the valve body.

Due to the fact that the securing thread 62 has a contrary thread direction than the adjustment thread, a securing functionality is given.

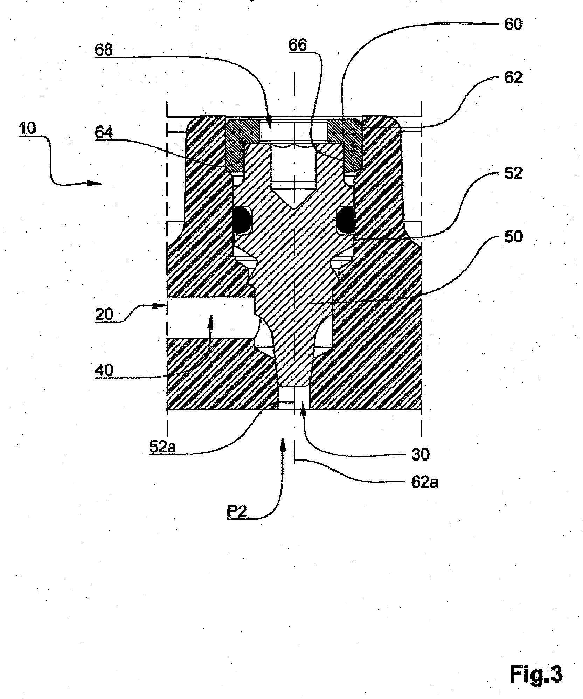

During use of a respective hydraulic door closer 100, fluid of the hydraulic fluid can flow through the valve channel 40. This can lead to an increase of flow and fluid pressure inside of the valve channel tending the valve body 50 to move upwards in Fig. 2. The upward movement could take place by a forced rotation of the valve body 50 around the thread axis 52a of the adjustment thread 52. Due to the fact that the counter contact surface 54 of the valve body 50 is in contact with the contact surface 64 of the valve cap 60, via frictional forces this rotational movement of valve body 50 would be transferred to a rotational movement of the valve cap 60 in the same direction. Due to the fact that the thread direction of the securing thread 62 is contrary to the thread direction of the adjustment thread 52, this leads to a contrary directed downward force of the movement by the securing thread 62 of the valve cap 60. Thereby, even with increased fluid pressure within the valve channel 60, the first valve position P1 or, for example according Fig. 3 the valve position P2 according this situation is secured by the respective valve cap 60.

To achieve even further frictional forces between the two elements, namely the valve cap 60 and the valve body 50, they comprise further contact surfaces, namely the centration surface 66 of the valve cap 60 and the counter centration surface 56 of the valve body 50. Beside a centration functionality during the method of securing the valve body 50, this leads to a higher contact surface overall to increase frictional forces between the two elements and thereby increasing the securing situation.

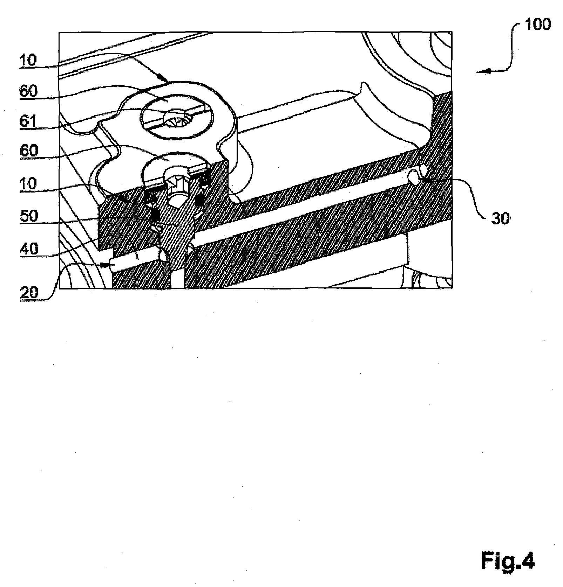

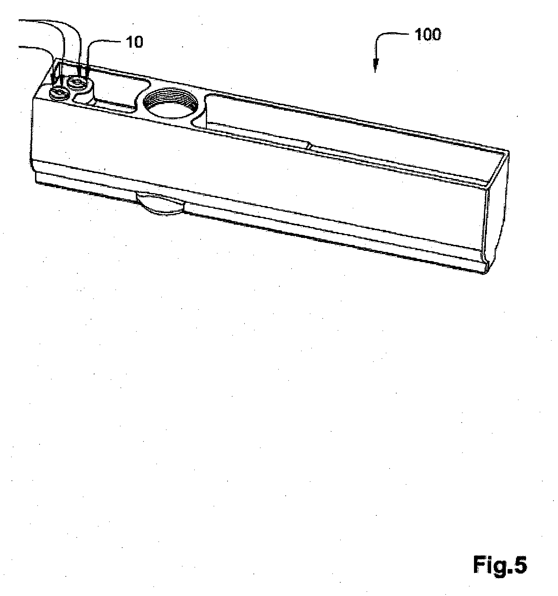

Fig. 4 and 5 disclose further embodiment of the valve devices 10, which are here positioned in an inventive hydraulic door closer 100. This door closer 100 comprises a damping functionality for the movement in the opening as well as in the closing direction. Due to the fact that two separate valve devices 10 are used the two different movements can be configured with different variations of the damping effect by giving different valve positions P1 and P2 for the two separate valve devices 10.

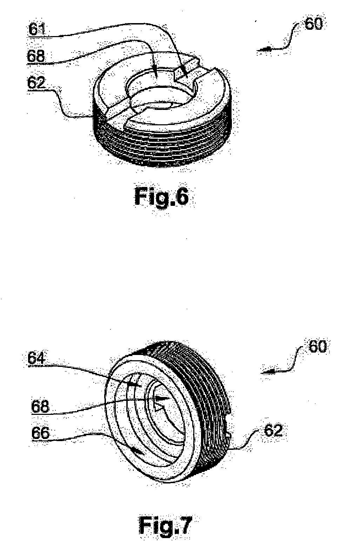

Fig. 6 and 7 show an embodiment of the valve cap 60. As it can be seen here, the valve cap 60 comprises an adjustment opening 68, opening a passage way to a respective adjustment interface 58 of the valve body. Moreover, it can be seen that the securing thread 62 is an outer thread. Inside of the valve cap 60 the two different orientated surfaces, namely the contact surface 64 as well as the centration surface 66 can be seen. From the outside view according to Fig. 6, a handling interface 61 can be seen, which correlates with the head of a screw driver to carry out the securing movement, namely the rotation relative to the securing axis.

### Reference signs

- 10: valve device
- 20: valve entrance
- 30: valve exit
- 40: valve channel
- 50: valve body
- 52: adjustment thread
- 52a: thread axis
- 54: counter contact surface
- 56: counter centration surface
- 58: adjustment interface
- 60: valve cap
- 61: handling interface
- 62: securing thread
- 62a: thread axis
- 64: contact surface
- 66: centration surface
- 68: adjustment opening

- 100: hydraulic door closer

- P1: first valve position
- P2: second valve position

## Claims

1. Hydraulic door closer (100) comprising a fluid system for damping the closing movement and/or the opening movement of a door, the fluid system comprises at least one valve device (10) for a hydraulic door closer (100), comprising a valve entrance (20), a valve exit (30) which is in fluid communication with the valve entrance (20) via a valve channel (40), further comprising a valve body (50) with an adjustment thread (52) which is arranged within the valve channel (40) moveable by the adjustment thread (52) between a first valve position (P1) with a first passage area and at least a second valve position (P2) with a second passage area, wherein a valve cap (60) is arranged with a contact surface (64) contacting a counter contact surface (54) of the valve body (50), **characterized in that** the valve cap (60) comprises a securing thread (62) with contrary thread direction compared to the adjustment thread (52) for counter bearing of the valve body (50), wherein in the valve device (10), which is part of the housing of the hydraulic door closer or comprises an own housing, respective counter threads for the adjustment thread (52), namely a counter adjustment thread, and for the securing thread (62), namely a counter securing thread are offered.

2. Hydraulic door closer (100) according to claim 1, **characterized in that** the adjustment thread (52) and the securing thread (62) comprise the same or at least the same thread pitches with contrary thread directions, in particular standard thread pitches.

3. Hydraulic door closer (100) according to any of the preceding claims, **characterized in that** the adjustment thread (52) and the securing thread (62) comprise parallel or at least parallel oriented thread axes (52a, 62a), in particular a common thread axis (52a, 62a).

4. Hydraulic door closer (100) according to any of the preceding claims, **characterized in that** the valve cap (60) comprises an adjustment opening (68), opening a passage way to an adjustment interface (58) of the valve body (50).

5. Hydraulic door closer (100) according to any of the preceding claims, **characterized in that** the valve cap (60) comprises a handling interface (61) for turning the valve cap (60) relative to a thread axis (62a) of the securing thread (62).

6. Hydraulic door closer (100) according to any of the preceding claims, **characterized in that** the fluid system comprises two valve devices (10) with the features of any of claims 1 to 5, one valve device (10) for the opening movement of the door and one valve device (10) for the closing movement of the door.

## Patentansprüche

1. Hydraulischer Türschließer (100), umfassend ein Fluidsystem zum Dämpfen der Schließbewegung und/oder der Öffnungsbewegung einer Tür, wobei das Fluidsystem mindestens eine Ventilvorrichtung (10) für einen hydraulischen Türschließer (100) umfasst, der einen Ventileingang (20), einen Ventilausgang (30), der mit dem Ventileingang (20) über einen Ventilkanal (40) in fluidischer Kommunikation steht, umfasst, der des Weiteren einen Ventilkörper (50) mit einem Einstellungsgewinde (52) umfasst, der innerhalb des Ventilkanals (40) durch das Einstellungsgewinde (52) zwischen einer ersten Ventilstellung (P1) mit einer ersten Durchgangsfläche und mindestens einer zweiten Ventilstellung (P2) mit einer zweiten Durchgangsfläche beweglich angeordnet ist, wobei eine Ventilkappe (60) mit einer Kontaktoberfläche (64), die mit einer Kontaktgegenfläche (54) des Ventilkörpers (50) in Kontakt steht, angeordnet ist, **dadurch gekennzeichnet, dass** die Ventilkappe (60) ein Sicherungsgewinde (62) mit entgegengesetzter Gewinderichtung im Verhältnis zu dem Einstellungsgewinde (52) als Gegenlager des Ventilkörpers (50) umfasst, wobei in der Ventilvorrichtung (10), welche Bestandteil des Gehäuses des hydraulischen Türschließers ist, oder ein eigenes Gehäuse umfasst, jeweilige Gegengewinde für das Einstellungsgewinde (52), nämlich ein Gegeneinstellungsgewinde, und für das Sicherungsgewinde (62), nämlich ein Gegensicherungsgewinde, zur Verfügung gestellt sind.

2. Hydraulischer Türschließer (100) nach Anspruch 1, **dadurch gekennzeichnet, dass** das Einstellungsgewinde (52) und das Sicherungsgewinde (62) dieselben oder mindestens dieselben Gewindesteigungen mit entgegengesetzten Gewinderichtungen, insbesondere standardmäßigen Gewindesteigungen umfassen.

3. Hydraulischer Türschließer (100) nach einem der vorhergehenden Ansprüche, **dadurch gekennzeichnet, dass** das Einstellungsgewinde (52) und das Sicherungsgewinde (62) parallel oder mindestens parallel ausgerichtete Gewindeachsen (52a, 62a), insbesondere eine gemeinsame Gewindeachse (52a, 62a) umfassen.

4. Hydraulischer Türschließer (100) nach einem der vorhergehenden Ansprüche, **dadurch gekennzeichnet, dass** die Ventilkappe (60) eine Einstellungsöffnung (68) umfasst, mit der ein Durchgangsweg zu einer Einstellungsschnittstelle (58) des Ventilkörpers (50) geöffnet wird.

5. Hydraulischer Türschließer (100) nach einem der vorhergehenden Ansprüche, **dadurch gekennzeichnet, dass** die Ventilkappe (60) eine Handhabungsschnittstelle (61) zum Drehen der Ventilkappe (60) im Verhältnis zu einer Gewindeachse (62a) des Sicherungsgewindes (62) umfasst.

6. Hydraulischer Türschließer (100) nach einem der vorhergehenden Ansprüche, **dadurch gekennzeichnet, dass** das Fluidsystem zwei Ventilvorrichtungen (10) mit den Merkmalen nach einem der Ansprüche 1 bis 5 umfasst, eine Ventilvorrichtung (10) für die Öffnungsbewegung der Tür und die andere Ventilvorrichtung (10) für die Schließbewegung der Tür.

## Revendications

1. Ferme-porte hydraulique (100) comportant un système fluidique pour amortir le mouvement de fermeture et/ou le mouvement d'ouverture d'une porte, le système fluidique comportant au moins un dispositif de vanne (10) pour le ferme-porte hydraulique (100) comportant une entrée de vanne (20), une sortie de vanne (30) qui est en communication fluidique avec l'entrée de vanne (20) par l'intermédiaire d'un canal de vanne (40), comportant en plus un corps de vanne (50) avec un filetage d'ajustage (52), qui est agencé au sein du canal de vanne (40) de façon mobile, par l'intermédiaire du filetage d'ajustage (52), entre une première position de vanne (P1) avec une première section de passage et au moins une deuxième position de vanne (P2) avec une deuxième section de passage, un capuchon de vanne (60) étant agencé avec une surface de contact (64) contactant une contre-surface de contact (54) du corps de vanne (50), **caractérisé en ce que** le capuchon de vanne (60) comporte un filetage sécurisant (62) avec un sens de filetage opposé par rapport au filetage d'ajustage (52) comme contre-palier du corps de vanne (50), dans lequel dans ledit dispositif de vanne (10) qui fait partie du boîtier du ferme-porte hydraulique ou comporte son propre boîtier, des contre-filetages respectifs pour le filetage d'ajustage (52), à savoir un contre-filetage d'ajustage, et pour le filetage sécurisant (62), à savoir un contre-filetage sécurisant sont offerts.

2. Ferme-porte hydraulique (100) selon la revendication 1, **caractérisé en ce que** le filetage d'ajustage (52) et le filetage sécurisant (62) comportent les mêmes ou au moins les mêmes pas de filetage avec des sens de filetage opposés, en particulier des pas de filetage standards.

3. Ferme-porte hydraulique (100) selon l'une des revendications précédentes, **caractérisé en ce que** le filetage d'ajustage (52) et le filetage sécurisant (62) comportent des axes de filetage (52a, 62a) orientés en parallèle ou au moins orientés en parallèle, en particulier un axe de filetage (52a, 62a) commun.

4. Ferme-porte hydraulique (100) selon l'une des revendications précédentes, **caractérisé en ce que** le capuchon de vanne (60) comporte une ouverture d'ajustage (68) qui ouvre un passage vers une interface d'ajustage (58) du corps de vanne (50).

5. Ferme-porte hydraulique (100) selon l'une des revendications précédentes, **caractérisé en ce que** le capuchon de vanne (60) comporte une interface de manipulation (61) pour tourner le capuchon de vanne (60) par rapport à l'axe du filetage (62a) du filetage sécurisant (62).

6. Ferme-porte hydraulique (100) selon l'une des revendications précédentes, **caractérisé en ce que** le système fluidique comporte deux dispositifs de vanne (10) avec des caractéristiques selon l'une des revendications 1 à 5, un dispositif de vanne (10) pour le mouvement d'ouverture de la porte et un dispositif de vanne pour le mouvement de fermeture de la porte.
